Europäisches Patentamt

European Patent Office

Office européen des brevets

(19)

(11) **EP 0 942 055 B1**

(12) **EUROPEAN PATENT SPECIFICATION**

(45) Date of publication and mention
of the grant of the patent:
**02.06.2004 Bulletin 2004/23**

(51) Int Cl.⁷: **C09J 7/00**, C09J 7/02

(21) Application number: **98200803.9**

(22) Date of filing: **13.03.1998**

(54) **Adhesive tape for adhering inserts to a page of a magazine**

Klebeband zum Befestigen von Einlagen auf der Seite einer Zeitschrift

Ruban adhésif pour adhérer des inserts à une page de magazine

(84) Designated Contracting States:
**DE FR GB IT**

(43) Date of publication of application:
**15.09.1999 Bulletin 1999/37**

(73) Proprietor: **MINNESOTA MINING AND
MANUFACTURING COMPANY
St. Paul, Minnesota 55133-3427 (US)**

(72) Inventors:
• **Congard, Pierre
95250 Beauchamp (FR)**
• **Weber, Jean-Philippe, 3M Technical Centre
92506 Rueil Malmaison (FR)**
• **Sabatier, Richard, 3M Technical Centre
92506 Rueil Malmaison (FR)**

(74) Representative: **Voortmans, Gilbert J.L. et al
3M Europe S.A./N.V.
OIPC
Hermeslaan 7
1831 Diegem (BE)**

(56) References cited:
WO-A-98/21285          GB-A- 2 298 390
US-A- 4 003 538         US-A- 4 925 714

EP 0 942 055 B1

**Description**

1. Field of the invention.

This invention relates to an adhesive tape that can be used to releasably adhere an insert to a page of a multi-page publication such as a newspaper or a magazine in such a way that when the insert is removed from the page of the printed publication, the surfaces of both the page and the insert are not tacky and the page does not get damaged by removing the insert.

2. Background of the invention.

Inserts such as product samples and mail back cards are frequently inserted in newspapers or magazines. Such inserts can be inserted in a magazine by permanently adhering them to a page of the multi-page printed publication. However, this has the disadvantage that upon removing the insert from the multi-page printed publication, the page to which it was adhered may get damaged. It is also known to adhere the insert to a page of a magazine or newspaper by means of a repositionable adhesive. While this method does not create damage to the page to which the insert was adhered, either the page or the insert will contain adhesive and one of them will remain tacky.

Similarly, US 4.398.985 describes that it is known to coat a face stock with a release material and this.is then laminated, with the release coated side down, to a paper base which has been coated on both sides with pressure sensitive adhesive. The outer adhesive layer is then used to adhere the face stock to a substrate. Due to the release material, the face stock can be peeled away from the adhesive layer of the paper base and thus the face stock can be separated from the substrate. However, the substrate remaining will be tacky due to the adhesive remaining thereon. Accordingly, this type of construction is not suitable for placing inserts in a magazine or printed publication.

US 4.398.985 attempts to solve this problem by providing a self-detackifying adhesive laminated construction. The laminated construction is produced by coating a film of a non-silicone containing polymer onto one side of a face stock and then laminating this construction to an adhesive which has been coated on a release liner. The polymer film and adhesive have differential release capabilities such that the polymer film will initially adhere to the face stock and the adhesive layer on the other side thereof, but upon delamination, the polymer film will have greater affinity for the adhesive layer. Accordingly, when the face stock is peeled away, the polymer film will delaminate therefrom and remain permanently affixed to the adhesive coating. This results in a non-tacky surface remaining because the remaining adhesive coating is covered by a non-tacky polymer. Also, the face stock will not be tacky.

While, the above method may be effective in placing inserts in magazines, it suffers from several disadvantages. Firstly, the method requires that the insert be coated on one side with a polymer film. This is not very practical in many instances. For example if the insert concerns a mail back card that is printed on one or both sides, after printing, the printer might have to send the mail back card to a specialised service for coating the mail back card and laminating it to the release liner with adhesive, because often printers do not have the necessary equipment. This makes the process cumbersome and costly.
Moreover, in producing magazines, printers are often under serious time constraints which do not allow for the insert to be send to a specialised service.to coat and laminate the insert. Also, depending on the kind of surface of the insert, for example paper or plastic, different polymer film coatings will be needed due to the required differential release capabilities.

EP 414 538 discloses a card that is adapted for removable attachment to a surface. The card comprises a card sheet having two opposite sides and a laminated sheet bonded to one side of the card sheet. The laminated sheet includes a plurality of overlying layers that are adapted to separate along an interface between two layers of thin film. The interface comprises a layer of adhesive. Accordingly, when the card sheet is removed by delamination at the interface, at least one of the remaining surfaces will contain the adhesive.

US 4.721.638 discloses a sticking material for preventing resticking. The material has an adhesive layer, a second layer laminated on one main surface of the adhesive layer, a peeling agent layer laminated on the second layer and a first layer laminated on the peeling agent layer. The equation, a<b is satisfied, wherein the force required to separate the first layer from the second layer at the peeling agent layer is denoted as a, and the adhesive force of the adhesive layer with the surface of the second layer is represented by b. Since the second and first layers are adhered temporarily via the peeling agent layer, the first layer once separated from the second layer, cannot be restuck. While this material is useful for labels such as price tags, the material is however not suitable for placing inserts in a multi-page printed publication.

US 4.925.714 discloses a co-extruded core laminate of polypropylene and polyethylene which has been provided on both sides with an adhesive layer. According to the teaching of this patent, such an adhesive tape can be used to adhere coupons, cards, tags or other cut-to-shape face pieces on substrates such as containers, wrappings and packages. The face piece can subsequently be peeled off in such a way that both the bottom of the face piece and top of the substrate are non-tacky. This is accomplished by delamination that occurs between the co-extruded layers. Such an adhesive tape however has the disadvantage that the bottom of the face piece and top of the substrate are not writable. Further, the composition of the co-extruded layers of the core laminate are limited in composition and cannot for example contain thermo-sensitive materials and components that degrade at the temperatures needed in an extrusion process.

3. Summary of the invention.

The present invention provides an adhesive tape (10,20) for laminating a first substrate (31) to a second substrate (32), said adhesive tape comprising a carrier (13) having on a first major surface a first adhesive layer (12) and having on a second major surface opposite to said first major surface in the order given a non-tacky polymer layer (14) and a second adhesive layer (15), wherein said adhesive tape (10,20) is capable of being adhered to said first substrate (31) by said first adhesive layer (12) and to said second substrate (32) by said second adhesive layer (15), and said adhesive tape (10,20) being capable of delamination between said carrier (13) and said non-tacky polymer layer (14) when said first (31) and second substrate (32) are peeled away from each other so as to leave said carrier (13) on said first substrate (31) and said non-tacky polymer layer (14) on said second substrate (32) with a major surface of said non-tacky polymer layer (14) or said carrier (13) exposed, with the proviso that said non-tacky polymer layer (14) and carrier (13) are not co-extruded layers.

The adhesive tape of the present invention allows to releasably adhere one substrate to another. When one of the substrates is peeled from the other, the adhesive tape delaminates between the carrier 13 and the non-tacky polymer layer 14 such that the surface on both substrates is non-tacky. Moreover, both surfaces can be chosen such that one or both of them are writable.This is particularly interesting in cases where for example the insert is a mail back card that has to be completed with information from the user. Further, the composition of carrier 13 and non-tacky polymer layer 14 can be varied widely and any of carrier 13 or non-tacky polymer layer 14 can include components that are thermo-sensitive and/or that might degrade at substantially elevated temperatures normally needed in an extrusion process. Also, the adhesive tape of the present invention has the advantage that the complete process of placing inserts in a multi-page printed publication can be automated and the adhesive tape can be used by a conventional printer without the need for a specialised service.

In a particular embodiment of the present invention there is provided an adhesive tape (10,20) for laminating a first substrate (31) to a second substrate (32), said adhesive tape comprising a carrier (13) having on a first major surface a first adhesive layer (12) and having on a second major surface opposite to said first major surface in the order given a non-tacky polymer layer (14) and a second adhesive layer (15), wherein the following formula is satisfied:

$$A>C<B$$

wherein A is the force necessary to peel said first adhesive layer (12) from said carrier (13), B is the force necessary to peel said second adhesive layer (15) from said non-tacky polymer layer (14), and C is the peel force necessary to peel the non-tacky polymer layer (14) from said carrier (13) to expose a major surface of said non-tacky polymer layer (14) or said carrier (13), with the proviso that said non-tacky polymer layer (14) and carrier (13) are not co-extruded layers. As explained in more detail below, the peel force C can be adjusted by including a delamination control layer 17 between carrier 13 and the non-tacky polymer layer 14.

The present invention also provides a method for releasably adhering a first substrate (31) to a second substrate (32) using an adhesive tape as described above.

Further provided is a laminate comprising a first substrate (31) releasably adhered to a second substrate (32) by an adhesive tape (10,20) as described above.

The present invention also provides a method of manufacturing an adhesive tape (10,20).

4. Brief description of the drawings.

The invention is illustrated by means of preferred embodiments shown in the following drawings without the intention to limit the invention thereto:

Figure 1 is a schematic drawing of a cross-section of an adhesive tape 10 in connection with the present invention.
Figure 2 is a schematic drawing of a cross-section of an adhesive tape 20 in connection with the present invention.
Figures 3a and 3b are schematic drawings to illustrate the method of peeling substrate 31 from substrate 32.
Figure 4 is a schematic drawing of an adhesive tape in the form of a roll.
Figure 5 is a schematic drawing illustrating an embodiment for placing an insert in a multi-page printed publication using an adhesive tape of the invention.

5. Detailed description of the invention and preferred embodiments.

In connection with the present invention, the meaning of "non-tacky polymer layer" is used to indicate a polymer layer that is not tacky at ambient conditions of humidity and temperature.

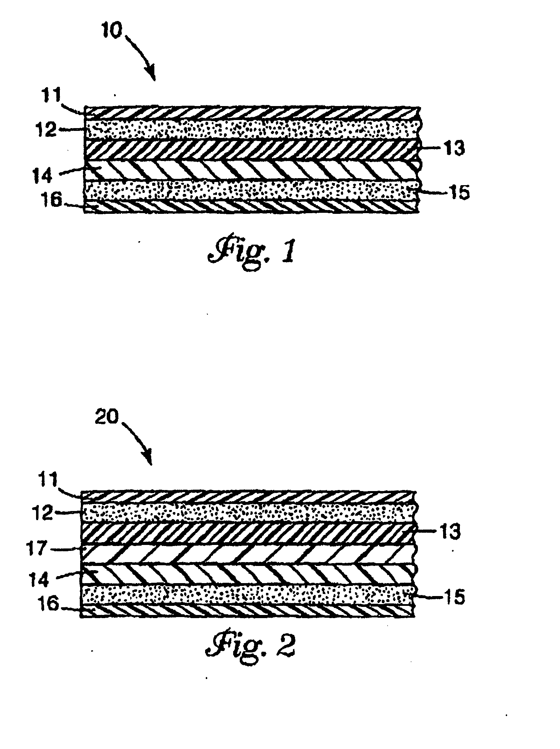

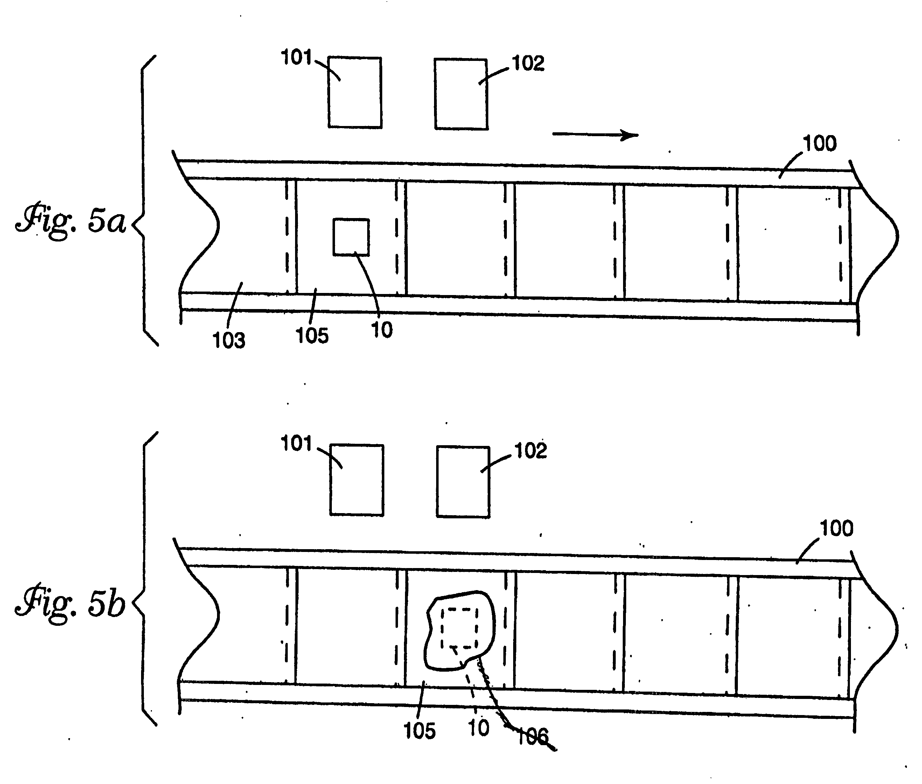

A first embodiment of the adhesive tape of the present invention is shown in figure 1. As can be seen, adhesive tape 10 comprises on one side of carrier 13 a first adhesive layer 12 and on the other side of carrier 13 a non-tacky polymer layer 14 and a second adhesive layer 15. Both adhesive layers are covered by a release liner (11,16). According to an embodiment illustrated in figure 4, the adhesive tape is provided as a roll wherein a release liner is provided between the adhesive layers 12 and 15. The tape of the present invention can also be provided in the form of labels.

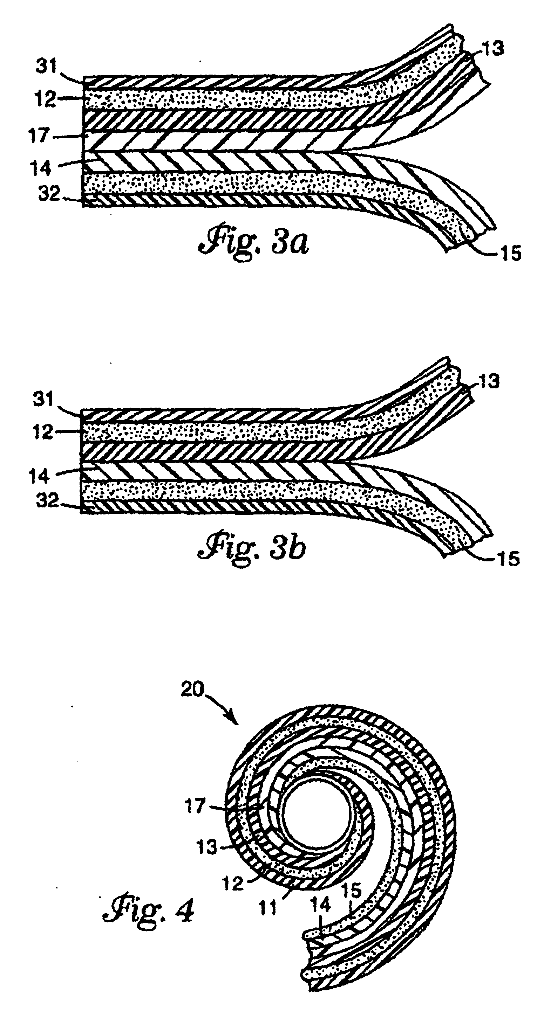

To adhere a first substrate 31 to a second substrate 32, the release liner 11 is removed and adhesive tape 10 is adhered to first substrate 31. The release liner 16 is then removed and the first substrate 31 may then be adhered to the second substrate 32 by second adhesive layer 15 of adhesive tape 10. It will be appreciated by one skilled in the art that it is also possible to first stick adhesive tape 10 to second substrate 32 and then to first substrate 31. When the first substrate 31 is subsequently peeled from the second substrate 32, delamination will occur at the interface of carrier 13 and non-tacky polymer layer 14 (see figure 3b). As a consequence non-tacky polymer layer 14 remains adhered via second adhesive layer 15 to second substrate 32 and a major surface of non-tacky polymer layer 14 is exposed. Carrier 13 remains adhered to first substrate 31 by first adhesive layer 12.

The adhesive layers 12 and 15 of the adhesive tape of the present invention can be the same or different but are preferably the same. The adhesive layers 12 and 15 may include any known adhesive that permanently adheres to substrate 31 or 32 respectively.

Examples include pressure sensitive adhesives, heat activated adhesives, thermosetting type adhesives and remoistenable adhesives. Particularly preferred adhesives include solution, water based and hot melt pressure sensitive adhesives. Specific pressure sensitive adhesives include acrylic based pressure sensitive adhesives, styrene-isoprene block copolymers, acrylic ester-vinyl acetate copolymers, ethylene-vinyl acetate copolymers, plasticized vinyl acetate homopolymers, rubber-latex resin emulsion systems. In the practice of preferred embodiments of the invention, the adhesive is an acrylic based adhesive.

Acrylic based adhesives are well-known in the art and are described in Satas, "Acrylic Adhesives," Handbook of Pressure-Sensitive Adhesive Technology, 2nd ed., pp. 396-456 (D. Satas, ed.), Van Nostrand Reinhold, New York (1989).

Suitable acrylic adhesives for use in this invention include commercially available acrylic adhesives such as the polyacrylate adhesives sold under the trademarks Duro-Tak 80-1194, 80-1196, 80-1197, 2287, 2516 and 2852 by National Starch and Chemical Corporation, Bridgewater, New Jersey. Other suitable acrylic adhesives are those sold under the trademarks Gelva-Multipolymer Solution GMS 737, 788, 1151 and 1430 (Monsanto; St. Louis, MO).

In this invention there can be used polyacrylate based adhesive including any of the homopolymers, copolymers, terpolymers, and the like of various (meth)acrylate esters.

Examples of polyacrylates for use in the invention include polymers of one or more monomers of (meth)acrylic acids and other copolymerizable monomers. The polyacrylates also include copolymers of acrylate and/or methacrylate esters and/or copolymerizable monomers such as those containing functional groups in addition to an ethylenically unsaturated group. By varying the amount of each type of monomer added, the cohesive properties of the resulting polyacrylate can be changed as is known in the art. A particularly preferred polyacrylate based pressure sensitive adhesive includes an adhesive composition containing copolymers of an acrylic or methacrylic acid and an alkyl acrylate or methacrylate wherein the alkyl group has at least 4 carbon atoms, typically 4 to 10 carbon atoms. Examples of such alkyl acrylates or methacrylates include n-butyl, n-pentyl, n-hexyl, cyclohexyl, isoheptyl, n-nonyl, n-decyl, isohexyl, isobornyl, 2-ethyloctyl, isooctyl, and 2-ethylhexyl acrylates and methacrylates. Preferred alkyl acrylates include isooctyl acrylate, 2-ethylhexyl acrylate, n-butyl acrylate and cyclohexyl acrylate. A particularly preferred alkyl acrylate is isooctyl acrylate. Particularly preferred alkyl methacrylates include butyl methacrylate, cyclohexyl methacrylate, and isobornyl methacrylate.

In accordance with a highly preferred embodiment in connection with this invention, the adhesive layers 12 and 15 comprise repulpable adhesive. A preferred repulpable adhesive for use in this invention has a rating of not more than 3 in the European repulpability test described in US 5,380,779. Examples of repulpable adhesive for use in the invention include the repulpable adhesives disclosed in US 5,380,779, US 4,413,080, US 4,569,960, US 4,482,675, US 4,992,501, 4,388,432, US 5,102,733 and US 5,125,995. The thickness of the adhesive layers 12 or 15 can be varied widely but is typically between 1µm and 100µm and preferably between 10µm and 40µm.

The carrier 13 can be any material commonly used for tapes and includes paper as well as plastic film. Examples of carriers include polyethylene film, polypropylene film, polyester film, polyethylene or polypropylene coated paper, transparent paper such as the transparent papers commercially available from Canson (France) and non-woven materials. In case paper is used as the carrier 13, it is preferred to use a smooth paper of low porosity. The thickness of carrier 13 is typically between 30μm and 250μm and preferably between 40μm and 70μm.

Examples of polymers for use in the non-tacky polymer layer 14 of an adhesive tape of this invention include polyvinyl chlorides, polyvinylidene chlorides, polyvinyl alcohols such as Mowiol™ 4/88 available from Clariant A.G., polyvinylacetates, polyvinyl pyrrolidones and copolymers of vinylchloride and vinylacetate such as UCAR™ vinyl VYES and UCAR™ vinyl VMCA both commercially available from Union Carbide. The non-tacky polymer layer 14 may contain additives in addition to the polymer. For example, the non-tacky polymer layer 14 may additionally contain wetting agents, thermo-sensitive compounds such as thermo-sensitive dyes, defoamers, plasticizers and fungicides. A particularly preferred non-tacky polymer layer 14 contains a repulpable polymer such as polyvinylalcohol. A non-tacky polymer layer 14 containing a polyvinylalcohol preferably also contains a plasticizer or combination of plasticizers.

Particularly preferred plasticizers for use in a polyvinyl alcohol based non-tacky polymer layer includes a combination of a polyol such as diethylene glycol and a hydroxy modified rubber such as Kraton™ L 1803 available from Shell. The thickness of the non-tacky polymer layer 14 is preferably between 1μm and 40μm and more preferably between 10μm and 15μm. According to a particular embodiment of the present invention, encapsulated fragrances can be included in the non-tacky polymer layer 14. Details about encapsulated fragrance and their preparation can be found in an article entitled "Encapsulation of fragrances" of Dr. Howard J. Buttery, in Cosmetics and Toiletries Manufacture Worldwide. Encapsulated fragrances are also commercially available from 3M under the brand 3M Dry Perfume. Including encapsulated fragrances can provide an advantage in case the insert is a sample of a fragrance. Removing such a sample from the magazine page by a user will cause rupture of the capsules containing the fragrance, thus releasing the fragrance so that the user immediately gets an impression of the perfume without having to open the sample. Furthermore, encapsulated fragrance may bring a pleasant dimension to advertisement inserted in the magazine.

The release liners 11 and 16 can be selected from a number of known and available papers having a release material coated onto one side of the paper web or on both sides in case of an adhesive tape in the form of a roll as shown in figure 5. The base paper of the release liner may be selected from krafts, super-calendered krafts, clay coated krafts, glassines; parchments, and other papers and films which have a suitable undercoating for. release coating hold-out. The release coating may be any of the known materials used for their release properties for adhesives. Preferred types are silicones and modified silicones, the modification including both copolymerization of silicones with other non-release chemical agents or by adding non-silicone materials to the silicone coating solution prior to application to the release base paper. Other release agents such as polyethylene, fluorocarbons, the Wemer-type chromium complexes, and polyvinyl octadecyl carbamate may also be used. The choice of release coating is dependent on the tack, adhesion level, and chemical nature of the adhesive layer 12 or 15. The release liners 11 and 16 are chosen such that when they are removed from the adhesive tape no premature delamination takes place between the carrier 13 and the non-tacky polymer layer 14.

Delamination at the interface between carrier 13 and non-tacky polymer layer 14 is typically accomplished by designing the adhesive tape such that the following equation is satisfied:

$$A > C < B$$

wherein A is the force necessary to peel the first adhesive layer 12 from the carrier 13, B is the force necessary to peel the second adhesive layer 15 from the non-tacky polymer layer 14, and C is the peel force necessary to peel the non-tacky polymer layer 14 from carrier 13 to expose a major surface of the non-tacky polymer layer 14. If needed, the peel force C can be adjusted by including a delamination control layer 17 between carrier 13 and non-tacky polymer layer 14.

The peel force will typically be between 0.1 N/cm and 0.25 N/cm when measured under a peel angle of 90° and at a rate of 300mm/min. The peel forces A and B typically have a value which is at least twice the value of the peel force C and preferably at least 5 times and more preferably at least 10 times the value of the peel force C.

Thus, in accordance with a particularly preferred embodiment in connection with the present invention there is provided adhesive tape 20 which includes a delamination control layer 17 between carrier 13 and non-tacky polymer layer 14 as shown in figure 2. Delamination control layer 17 is a layer that can be placed between the carrier 13 and non-tacky polymer layer 14 to control the delamination of the adhesive tape. Thus, delamination control layer 17 can be chosen to adjust the force necessary to cause delamination between carrier 13 and non-tacky polymer layer 14 relative to the force necessary to cause delamination of the adhesive layers. Delamination control layer 17 can be chosen to either increase or decrease the force necessary to cause delamination between carrier 13 and non-tacky polymer layer 14. Delamination control layer 17 is typically a layer that adheres stronger to carrier 13 than it adheres to non-tacky polymer layer 14 and can be used to facilitate delamination of the tape between carrier 13 and non-tacky polymer layer 14. Delamination control layer 17 should also be non-tacky. Accordingly, as shown in figure 3a, the adhesive tape 20 will delaminate at the interface between non-tacky polymer layer 14 and delamination control layer 17.

A delamination control layer 17 for decreasing the delamination force, typically includes a release material such as silicone or fluorine containing material. Particularly suitable materials are silicone containing materials. By varying the amount of silicone in the delamination control layer 17, the delamination force can be adjusted as desired. A particularly desirable release material for delamination control layer 17 is an aqueous emulsion of silicone latex, available from Rhone-Poulenc as Silicolease® emulsion system, further containing a hydrophilic binder such as hydroxyethyl cellulose. Still further materials for use in delamination control layer 17 include the release materials described in EP-A0618509, US 5,202,190 and US 5,032,460. A delamination control layer 17 for decreasing the delamination force (peel force C) is highly preferred in case carrier 13 comprises paper.

The delamination force may also be adjusted by providing the delamination control layer 17 discontinuous. For example, a silicone release material typically used to produce a release liner, may be applied by flexographic printing to the carrier 13 such that only about 90 to 95% of the carrier's surface is covered by the release material. As a result, the force to delaminate non-tacky layer 14 from the carrier 13 will be low at places where the release material covers the surface of carrier 13 and will be high at places where the surface of carrier 13 is not covered by the release material so that non-tacky layer 14 may be in contact with carrier 13 at such places. Since the force necessary to cause delamination between carrier 13 and non-tacky polymer layer 14 is the average of the force at a place where release material covers the surface of carrier 13 and where it does not cover the surface of carrier 13, the delamination force can be adjusted by varying the amount of surface of carrier 13 covered by the release material of delamination control layer 17. According to a still further embodiment of the present invention, a polyurethane layer can be used as the delamination control layer 17. The latter offers the advantage that after delamination, the surface of carrier 13 containing the delamination control layer 17 will be writable.

In case the carrier is of plastic, it may be desirable to increase the force necessary to cause delamination between carrier 13 and non-tacky polymer layer 14 by means of delamination control layer 17 because in that case, the delamination force may be so small that delamination could occur during handling. Alternatively, the surface of carrier 13 may be given a corona treatment to increase the delamination force.

Further, in accordance with the present invention, it is highly preferred that the adhesive tape 10,20 is transparent. Therefore, it is preferred to use a transparent carrier 13, such as a plastic film or transparent paper, and transparent layers 12,14,15 and 17. It will further be appreciated by one skilled in the art, that the adhesive tape of the invention can contain additional layers than those described above such as primer-layers provided on one or both sides of the carrier. According to a particular preferred embodiment, adhesive tape 10,20 is repulpable. A repulpable adhesive tape 10,20 can be obtained by selecting a repulpable carrier such as paper and by selecting repulpable compositions for the adhesive layers (12,15), non-tacky polymer layer 14 and delamination control layer 17 when present.

In accordance with this invention, a method of manufacturing an adhesive tape (10,20) for releasably adhering a first substrate (31) to a second substrate (32) comprises the steps of:

    (a) providing a carrier (13);
    (b) applying a non-tacky polymer layer (14) to a first major surface of said carrier (13);
    (c) applying an adhesive layer (15) to said non-tacky polymer layer and
    (d) applying an adhesive layer (12) to a second major surface of said carrier (13) opposite to said first major surface of said carrier (13),

wherein said step (b) is carried out subsequent to step (a) and said adhesive tape (10,20) is capable of delamination between said carrier (13) and said non-tacky polymer layer (14) when said first (31) and second substrate (32) are peeled away from each other so as to leave said carrier (13) on said first substrate (31) and said non-tacky polymer layer (14) on said second substrate (32) with a major surface of said non-tacky polymer layer (14) or carrier (13) exposed.

The above method may further comprise the step of applying a delamination control layer 17 to carrier 13 if such layer is desirable.

Preferably, non-tacky polymer layer 14 and optional delamination control layer 17 are applied from a coating solution comprising the components of the layer dissolved or dispersed in a solvent. The solvent can be an organic solvent or water or mixtures of water and an organic solvent. The adhesive layers can be applied by any known adhesive coating technique or they can be applied by lamination.

For example the adhesive tape 20 including paper, e.g. transparent paper, as carrier 13 may be coated on the first major surface with a delamination control layer 17. Such coating may be applied by well known coating techniques such as die coating or gravure coating. The second major surface of the paper may be coated with a primer layer. On the delamination control layer 17 is then coated the non-tacky polymer layer 14. This may for example be accomplished by hoppercoating or any other coating technique known in the art. The second major surface of the paper, which has optionally been provided with a primer layer, is coated with the adhesive layer 12 and a release liner 11 is then provided on the adhesive layer 12. Alternatively, a release liner 11 provided with adhesive layer 12 may be laminated to the second major surface of the paper. Finally, a liner 16 provided with adhesive layer 15 is laminated to the non-tacky layer 14 to produce an adhesive tape 20.

According to a further embodiment, adhesive tape 20 may be produced by coating a first major surface of carrier 13, for example paper, with a delamination control layer 17 and non-tacky polymer layer 14 as described above. Liner 11 coated with adhesive 12 may then be laminated to the non-tacky polymer layer 14. The second major surface of carrier 13 can be coated with adhesive layer 15 and the adhesive tape thus produced can be wound such that the release liner forms the outer circumference of the roll as shown in figure 4. As an alternative to this method of producing a roll of adhesive tape, the adhesive layer 15 may also be applied by lamination.

The adhesive tape of the present invention can be used to releasably adhere any of two substrates to one another. Examples of substrates 31 and 32 include paper, cardboard, plastic film, textile, metal and glass. The present invention is however particularly suitable for adhering inserts to a page of a multi-page printed publications. Examples of inserts include mail back cards, plastic cards and product samples such as samples of perfume packaged in plastic or aluminized bag.

Figure 5 illustrates an embodiment for automatically placing inserts in a newspaper, magazine or other multi-page printed publication. As shown in figure 5a, the pages 103 of a multi-page printed publication are transported in an overlapping configuration by a conveyor 100. By means of for example a label applicator 101, adhesive tape 10 in the form of a label may be applied to a desired page 105 and release liners 11 and/or 16 are removed from adhesive tape 10 such that the adhesive tape is adhered to desired page 105 by adhesive layer 12 or 15 and the other adhesive layer is exposed. The conveyor is transported in the direction of the arrow shown in figure 6a so that desired page 105 is transported under insert applicator 102. Once desired page 105 is properly positioned with adhesive tape 10 under the insert applicator 102, the latter applies the insert (see figure 5b) which is thereby adhered via adhesive layer 15 or 12 respectively to the desired page 105. Proper positioning may either be detected or may be accomplished by synchronisation of the speed of the conveyor with the speed of application of inserts from applicator 102. The pages of the multi-page printed publication, including desired page 105 with the insert thereon, may then be further transported and further processed to form the multi-page printed publication.

EXAMPLES

The following examples are provided to illustrate the invention in more detail without however limiting the invention thereto. In the examples all parts, ratios, percentages are by weight unless otherwise noted.

Example 1

The following coating solutions were prepared:

- Coating solution for the delamination control layer (coating solution 1-A)

33 parts of polyvinyl alcohol modified with 67 parts of octadecyl isocyanate were dissolved in toluene in an amount of 6.7%.

- Coating solution for the non-tacky polymer layer (coating solution 1-B)

An aqueous solution containing the following components was prepared:

| | |
|---|---|
| Polyvinylalcohol (Mowiol™ 4-88, available from Clariant) | 94.5% |
| diethylene glycol | 5% |
| p-hydroxymethylbenzoate | 0.3% |
| p-hydroxypropylbenzoate | 0.1% |
| Surfynol™ 336 (available from Air Products) | 0.1% |

- Coating solution for the adhesive layers (coating solution 1-C)

A 40% solids solution in a 1:1 mixture of ethylacetate and methanol was prepared containing 100parts of acrylic copolymer of butylacrylate and acrylic acid (75/25), 75 parts of a hydrogenated rosin acid tackifier, 70 parts of mono-fenyl ether of tetraethylene glycol as a plasticizer and 65 parts of N-methyldiethanolamine as a neutralizing agent.

Preparation of the adhesive tape:

Silcote 6625 paper (57g/m$^2$) available from Ahlstrom Paper Group was used as the carrier 13. Silcote 6625 is a smooth paper that has been provided on one side (hereinafter A-side) with a barrier coating containing a latex polymer, silicates and starch. The opposite side of the paper was uncoated (B-side)

The A-side of the paper was coated with coating solution I-A using Meyer bar coating with a 35μm wire and parallel bar speed. The coating was dried and the obtained dry coating thickness was about 2-3μm.

To this layer was then coated the coating solution 1-B using a nip feed coater with a feed gap of 40μm. The coating was dried at an elevated temperature and the obtained dry coating thickness was about 8-13μm. A coated paper sample A was thus obtained.

Separately, there was coated the coating solution 1-C to a siliconized release liner using nip feed coating with a 100μm gap. After drying, a coating thickness of about 35μm was obtained.

Thus obtained adhesive coated release liner was laminated with the adhesive layer on the coated side (side A) of the coated paper sample A. At the opposite side of the paper sample (side B), was provided an adhesive layer by transferring the adhesive layer from the above prepared adhesive coated release liner to the paper. A thus obtained adhesive tape was wound to a roll as shown in figure 4.

A piece of a thus prepared adhesive tape was adhered with the adhesive layer on the B-side of the paper on a magazine page. The release liner on side A of the paper was then removed and a cardboard was adhered with the exposed adhesive layer to the magazine page. The cardboard did not release from the magazine page during normal handling of the magazine and could be removed easily by rapidly peeling the cardboard. No damage to the magazine page occurred and both the page and cardboard were non-tacky.

Example 2

To a transparent paper available from Canson (70g/m$^2$) was coated a polyurethane release coat obtained from Ichemco (Italy) to a wet coating thickness of 40μm using a doctor blade. After drying, a thickness of about 5μm was obtained. To this polyurethane coating was then coated coating solution 1-B (described in example 1) at a wet coating thickness of 40μm using a doctor blade. After drying, a thickness of about 8-11μm was obtained. To this coating was then provided an adhesive coating solution of 25% solids containing a copolymer of iso-octylacrylate and acrylic acid (95/5) tackified with 10% of a rosin ester (Foral™ 85, available from Hercules) relative to the copolymer. The adhesive coating was coated by a doctor blade at a wet coating thickness of 100μm. The same adhesive coating was also coated to the other side of the transparent paper at a wet coating thickness of 100μm and both adhesive layers were protected with a release liner.

The thus obtained adhesive tape could be used to adhere a cardboard to a magazine page. By rapid peeling the cardboard could be removed from the magazine page without causing damage thereto and both the magazine page and cardboard surfaces were non-tacky.

Examples 3 to 10

These examples illustrate that the delamination between the carrier and the non-tacky polymer layer can be varied by modifying the chemical composition of the delamination control layer.

A paper ( ADERCOTE™ Gerfast 80g/m$^2$ available from Ahlstrom Paper Group) coated on one side with a latex polymer (A-side) and uncoated on the other side (B-side) was provided. Samples 3 to 11 were prepared by coating to the A-side of the paper a silicone release coating as shown in table 1 using doctor blade coating without a shim. A very thin coating was thus obtained. To this silicone release coating were then coated the coating solution 1-B of example 1 at a dry thickness of 8-12μm and the adhesive coating solution 1-C of example 1 at a dry thickness of 38-45μm. The adhesive layer was protected with a release liner. At the opposite side (B-side) of the paper was coated with the adhesive coating solution 1-C at a dry thickness of 38-45μm and the adhesive layer was also protected with a release liner.

| Example no[1] | | | | | | | | |
|---|---|---|---|---|---|---|---|---|
| Comp.[2] | 3 | 4 | 5 | 6 | 7 | 8 | 9 | 10 |
| A700- | 40 | 40 | 40 | 40 | 40 | 40 | 40 | 40 |
| 71822 | 0.16 | 0.32 | 0.48 | 0.64 | 0.8 | 0.96 | 1.12 | 1.28 |
| 71823 | 0.016 | 0.032 | 0.048 | 0.064 | 0.08 | 0.096 | 0.112 | 0.128 |
| 71806 | 0.0064 | 0.0128 | 0.0192 | 0.0256 | 0.032 | 0.0384 | 0.0448 | 0.0512 |

notes: (1) the amounts of the components of the coating solution is in grams.

(2) A700 is a solution of a silicone latex in water (40% solids) (Silicolease™ A700 available from Rhone-Poulenc); 71822 is a solution of a silicone polymer in water (41.5% solids) (Silicolease™ 71822 available from Rhône-Poulenc); 71823 is a solution of a catalyst in water (40.9% solids) (Silicolease™ 71823 available from Rhone-Poulenc) and 71806 is a solution of crosslinker in water (57% solids) (Silicolease™ 71806 available from Rhône-Poulenc).

Each of the adhesive tapes 3 to 10 obtained was used to adhere a cardboard to a magazine page. It was observed that with the adhesive tapes of examples 3 to 5, damage to the magazine page sometimes occurred when removing the cardboard and with the adhesive tapes of examples 8 to 10, the cardboard sometimes released from the magazine page upon handling. Examples 6 and 7 provided the best results.

Example 11

On a polyester film having a thickness of 70μm was coated the coating solution 1-B of example 1 using doctor blade coating to a wet thickness of 30μm. To this coating and to the opposite side of the polyester film was then provided the adhesive coating described in example 2 to a wet coating thickness of about 70μm using a doctor blade. Both adhesive layers were protected by a liner.
The thus obtained adhesive tape could be used to releasably adhere an article to a magazine page.

Example 12.

An adhesive tape was prepared as in example 11 but with the exception that instead of the coating solution 1-B, a 30% solution in methylethyl ketone of a copolymer vinylchloride. and vinylacetate (UCAR™ vinyl VYES available from Union Carbide) was used.
The thus obtained adhesive tape could be used to releasably adhere an article to a magazine page.

**Claims**

1.   An adhesive tape (10,20) for laminating a first substrate (31) to a second substrate (32), said adhesive tape comprising a carrier (13) having on a first major surface a first adhesive layer (12) and having on a second major surface opposite to said first major surface in the order given a non-tacky polymer layer (14) and a second adhesive layer (15), wherein the following formula is satisfied:

$$A > C < B$$

wherein A is the force necessary to peel said first adhesive layer (12) from said carrier (13), B is the force necessary to peel said second adhesive layer (15) from said non-tacky polymer layer (14), and C is the peel force necessary to peel the non-tacky polymer layer (14) from said carrier (13) to expose a major surface of said non-tacky polymer layer (14) or a major surface of said carrier (13) with the proviso that said non-tacky polymer layer (14) and carrier (13) are not co-extruded layers.

2.   An adhesive tape according to claim 1 further comprising a release liner (11) provided on said first adhesive layer (12) and a release liner (16) provided on said second adhesive layer (15).

3.   An adhesive tape according to claim 1 wherein said adhesive tape is in the form of a roll and a release liner is provided between said first (12) and second adhesive layer (15).

4.   An adhesive tape according to any of the previous claims wherein a delamination control layer (17) is provided between said carrier (13) and said non-tacky polymer layer (14).

5. An adhesive tape according to claim 4 wherein said delamination control layer (17) comprises a polysiloxane or a fluorinated polymer.

6. An adhesive tape according to any of the previous claims wherein said non-tacky polymer layer (14) comprises a polymer selected from the group consisting of a polyvinyl alcohol, a polyvinyl chloride and a copolymer of vinyl acetate and vinyl chloride.

7. An adhesive tape according to any of the previous claims wherein said carrier (13) is a plastic film or paper.

8. An adhesive tape according to any of the previous claims wherein said adhesive tape is transparent.

9. An adhesive tape according to any of the previous claims wherein said carrier (13) is paper and said adhesive tape is repulpable.

10. Adhesive tape according to claim 1 wherein each of said peel forces A and B have a value that is at least twice the value of peel force C.

11. Method of releasably adhering a first substrate (31) to a second substrate (32) comprising the steps of providing an adhesive tape (10,20) as defined in any of claims 1 to 10, adhering said first adhesive layer (12) to said first substrate (31) and said second adhesive layer (15) to said second substrate (32).

12. Method according to claim 11 wherein one of said first and second substrates (31,32) is a page of a printed publication comprising multiple pages and the other of said first and second substrate (31,32) is an article to be adhered to that page.

13. A laminate comprising a first substrate (31) releasably adhered to a second substrate (32) by an adhesive tape (10,20) as defined in any of claims 1 to 10.

14. A laminate according to claim 13 wherein one of said first and second substrates (31,32) is a page of a printed publication comprising multiple pages and the other of said first and second substrate (31,32) is an article to be adhered to that page.

15. A method of manufacturing an adhesive tape (10,20) as defined in claim 1 for releasably adhering a first substrate (31) to a second substrate (32) comprising the steps of:

(a) providing said carrier (13);
(b) applying said non-tacky polymer layer (14) to a first major surface of said carrier (13);
(c) applying said adhesive layer (15) to said non-tacky polymer layer and
(d) applying said adhesive layer (12) to a second major surface of said carrier (13) opposite to said first major surface of said carrier (13),

wherein said step (b) is carried out subsequent to step (a).

16. A method according to claim 15 wherein said non-tacky polymer layer (14) is coated to said carrier (13) from a coating solution.

17. A method according to claim 15 wherein said method further comprises the step of applying on said carrier (13) a delamination control layer (17).

**Patentansprüche**

1. Klebeband (10, 20) zum Laminieren eines ersten Substrates (31) an ein zweites Substrat (32), wobei das Klebeband einen Träger (13) umfasst, der auf einer ersten Hauptfläche eine erste Klebeschicht (12) und auf einer zweiten Hauptfläche gegenüber der ersten Hauptfläche in der genannten Reihenfolge eine nicht klebrige Polymerschicht (14) und eine zweite Klebeschicht (15) aufweist, wobei die folgende Formel erfüllt ist:

$$A > C < B$$

wobei A die Kraft ist, die zum Abziehen der ersten Klebeschicht (12) von dem Träger (13) erforderlich ist, B die Kraft ist, die zum Abziehen der zweiten Klebeschicht (15) von der nicht klebrigen Polymerschicht (14) erforderlich ist, und C die Abziehkraft ist, die zum Abziehen der nicht klebrigen Polymerschicht (14) von dem Träger (13) erforderlich ist, um eine Hauptfläche der nicht klebrigen Polymerschicht (14) oder eine Hauptfläche des Trägers (13) frei zu legen, unter der Voraussetzung, dass die nicht klebrige Polymerschicht (14) und der Träger (13) nicht coextrudierte Schichten sind.

2. Klebeband nach Anspruch 1, des Weiteren umfassend einen Release-Liner (11), der an der ersten Klebeschicht (12) bereitgestellt ist, und einen Release-Liner (16), der an der zweiten Klebeschicht (15) bereitgestellt ist.

3. Klebeband nach Anspruch 1, wobei das Klebeband die Form einer Rolle aufweist und ein Release-Liner zwischen der ersten (12) und der zweiten Klebeschicht (15) bereitgestellt ist.

4. Klebeband nach einem der vorangehenden Ansprüche, wobei eine Ablöseregulierungsschicht (17) zwischen dem Träger (13) und der nicht klebrigen Polymerschicht (14) bereitgestellt ist.

5. Klebeband nach Anspruch 4, wobei die Ablöseregulierungsschicht (17) ein Polysiloxan oder ein fluoriniertes Polymer umfasst.

6. Klebeband nach einem der vorangehenden Ansprüche, wobei die nicht klebrige Polymerschicht (14) ein Polymer umfasst, das aus der Gruppe ausgewählt ist, die aus einem Polyvinylalkohol, einem Polyvinylchlorid und einem Copolymer von Vinylacetat und Vinylchlorid besteht.

7. Klebeband nach einem der vorangehenden Ansprüche, wobei der Träger (13) ein Kunststofffilm oder ein Papier ist.

8. Klebeband nach einem der vorangehenden Ansprüche, wobei das Klebeband transparent ist.

9. Klebeband nach einem der vorangehenden Ansprüche, wobei der Träger (13) Papier ist und das Klebeband repulpierbar ist.

10. Klebeband nach Anspruch 1, wobei jede der Abziehkräfte A und B einen Wert hat, der wenigstens das Zweifache des Wertes der Abziehkraft eist.

11. Verfahren zum lösbaren Ankleben eines ersten Substrates (31) an ein zweites Substrat (32), umfassend die Schritte des Bereitstellens eines Klebebandes (10, 20), wie in einem der Ansprüche 1 bis 10 definiert, Anklebens der ersten Klebeschicht (12) an das erste Substrat (31) und der zweiten Klebeschicht (15) an das zweite Substrat (32).

12. Verfahren nach Anspruch 11, wobei eines von dem ersten und zweiten Substrat (31, 32) eine Seite einer Druckschrift ist, die mehrere Seiten umfasst, und das andere von dem ersten und zweiten Substrat (31, 32) ein Artikel ist, der an diese Seite geklebt wird.

13. Laminat, umfassend ein erstes Substrat (31), das mit Hilfe eines Klebebandes (10, 20), wie in einem der Ansprüche 1 bis 10 definiert, lösbar an ein zweites Substrat (32) geklebt ist.

14. Laminat nach Anspruch 13, wobei eines von dem ersten und zweiten Substrat (31, 32) eine Seite einer Druckschrift ist, die mehrere Seiten umfasst, und das andere von dem ersten und zweiten Substrat (31, 32) ein Artikel ist, der an diese Seite geklebt wird.

15. Verfahren zum Herstellen eines Klebebandes (10, 20), wie in Anspruch 1 definiert, zum lösbaren Ankleben eines ersten Substrates (31) an ein zweites Substrat (32), umfassend die folgenden Schritte:

(a) Bereitstellen des Trägers (13),

(b) Aufbringen der nicht klebrigen Polymerschicht (14) auf eine erste Hauptfläche des Trägers (13);

(c) Aufbringen der Klebeschicht (15) auf die nicht klebrige Polymerschicht; und

(d) Aufbringen der Klebeschicht (12) auf eine zweite Hauptfläche des Trägers (13) gegenüber der ersten Hauptfläche des Trägers (13),

wobei der Schritt (b) anschließend an Schritt (a) durchgeführt wird.

**16.** Verfahren nach Anspruch 15, wobei die nicht klebrige Polymerschicht (14) auf den Träger (13) von einer Beschichtungslösung aufgetragen wird.

**17.** Verfahren nach Anspruch 15, wobei das Verfahren des Weiteren des Schritt des Aufbringens einer Ablöseregulierungsschicht (17) auf den Träger (13) umfasst.


**Revendications**

**1.** Ruban adhésif (10, 20) servant à stratifier un premier substrat (31) sur un second substrat (32), ledit ruban adhésif comprenant un support (13) sur une première surface majeure duquel se trouve une première couche d'adhésif (12) et sur une seconde surface majeure, opposée à ladite première surface majeure, duquel se trouvent, dans l'ordre indiqué, une couche de polymère non poisseuse (14) et une seconde couche d'adhésif (15), dans lequel la formule suivante est satisfaite :

$$A > C < B$$

où A est la force nécessaire pour décoller ladite première couche d'adhésif (12) dudit support (13), B est la force nécessaire pour décoller ladite seconde couche d'adhésif (15) de ladite couche de polymère non poisseuse (14), et C est la force nécessaire pour décoller la couche de polymère non poisseuse (14) dudit support (13) pour exposer une surface majeure de ladite couche de polymère non poisseuse (14) ou une surface majeure dudit support (13), à condition que ladite couche de polymère non poisseuse (14) et ledit support (13) ne soient pas des couches co-extrudées.

**2.** Ruban adhésif selon la revendication 1 comprenant en outre une couverture anti-adhésive (11) placée sur ladite première couche d'adhésif (12) et une couverture anti-adhésive (16) placée sur ladite seconde couche d'adhésif (15).

**3.** Ruban adhésif selon la revendication 1 dans lequel ledit ruban adhésif est sous forme d'un rouleau et une couverture anti-adhésive est placée entre lesdites première (12) et seconde (15) couches d'adhésif.

**4.** Ruban adhésif selon l'une quelconque des revendications précédentes dans lequel une couche limitant le délaminage (17) est placée entre ledit support (13) et ladite couche de polymère non poisseuse (14).

**5.** Ruban adhésif selon la revendication 4 dans lequel ladite couche limitant le délaminage (17) comprend un polysiloxane ou un polymère fluoré.

**6.** Ruban adhésif selon l'une quelconque des revendications précédentes dans lequel ladite couche de polymère non poisseuse (14) comprend un polymère choisi dans le groupe constitué par un poly(alcool vinylique), un poly(chlorure de vinyle) et un copolymère d'acétate de vinyle et de chlorure de vinyle.

**7.** Ruban adhésif selon l'une quelconque des revendications précédentes dans lequel ledit support (13) est un film de plastique ou du papier.

**8.** Ruban adhésif selon l'une quelconque des revendications précédentes dans lequel ledit ruban adhésif est transparent.

**9.** Ruban adhésif selon l'une quelconque des revendications précédentes dans lequel ledit support (13) est du papier et ledit ruban adhésif est susceptible de remise en pâte.

**10.** Ruban adhésif selon la revendication 1 dans lequel chacune desdites forces de décollement A et B a une valeur qui est au moins égale au double de la valeur de la force de décollement C.

**11.** Procédé permettant de coller de façon amovible un premier substrat (31) sur un second substrat (32) comprenant les étapes consistant à se procurer un ruban adhésif (10, 20) tel que défini dans l'une quelconque des revendications 1 à 10, à coller ladite première couche d'adhésif (12) audit premier substrat (31) et ladite seconde couche d'adhésif (15) audit second substrat (32).

**12.** Procédé selon la revendication 11 dans lequel un desdits premier et second substrats (31, 32) est une page de publication imprimée comprenant de multiples pages et l'autre desdits premier et second substrats (31, 32) est un article à coller sur cette page.

**13.** Stratifié comprenant un premier substrat (31) collé de façon amovible à un second substrat (32) par un ruban adhésif (10, 20) tel que défini dans l'une quelconque des revendications 1 à 10.

**14.** Stratifié selon la revendication 13 dans lequel un desdits premier et second substrats (31, 32) est une page de publication imprimée comprenant de multiples pages et l'autre desdits premier et second substrats (31, 32) est un article à coller sur cette page.

**15.** Procédé de fabrication d'un ruban adhésif (10, 20) tel que défini dans la revendication 1 servant à coller de façon amovible un premier substrat (31) à un second substrat (32) comprenant les étapes consistant à :

    (a) se procurer ledit support (13) ;
    (b) appliquer ladite couche de polymère non poisseuse (14) sur une première surface majeure dudit support (13) ;
    (c) appliquer ladite couche d'adhésif (15) sur ladite couche de polymère non poisseuse et
    (d) appliquer ladite couche d'adhésif (12) sur une seconde surface majeure dudit support (13), opposée à ladite première surface majeure dudit support (13),

dans lequel ladite étape (b) est réalisée après l'étape (a).

**16.** Procédé selon la revendication 15 dans lequel ladite couche de polymère non poisseuse (14) est appliquée sur ledit support (13) à partir d'une solution de revêtement.

**17.** Procédé selon la revendication 15 dans lequel ledit procédé comprend en outre l'étape consistant à appliquer, sur ledit support (13), une couche limitant le délaminage (17).

Fig. 1

Fig. 2

*Fig. 3a*

*Fig. 3b*

*Fig. 4*

Fig. 5a

Fig. 5b